# EUROPEAN PATENT SPECIFICATION

(11) **EP 3 177 466 B1**
(45) Date of publication and mention of the grant of the patent: **18.07.2018**
(21) Application number: 15864463.3
(22) Date of filing: 25.09.2015
(51) Int. Cl.: B60C 13/00, B60C 13/04, C08L 21/00, B60C 1/00

(54) **PNEUMATIC TIRE HAVING SIDEWALL COVER LAYER**
LUFTREIFEN MIT SEITENWANDDECKSCHICHT
BANDAGE PNEUMATIQUE AYANT UNE COUCHE DE RECOUVREMENT DE FLANC

(30) Priority: 03.12.2014 US 201462087003 P
(43) Date of publication of application: 14.06.2017
(73) Proprietor: Bridgestone Americas Tire Operations, LLC, Nashville, Tennessee 37214 (US)
(72) Inventor: ZEMLA, David J., Canal Fulton, Ohio 44614 (US); STUCKEY, Jon I., Lorain, Ohio 44053 (US); BARNED, Robert G., Akron, Ohio 44313 (US)
(74) Representative: Oxley, Robin John George
(86) International application number: PCT/US2015/052109
(87) International publication number: WO 2016/089468

(56) References cited:
- EP-A1- 1 526 154
- EP-A1- 2 233 323
- EP-A1- 2 615 131
- EP-A2- 1 167 079
- WO-A1-2010/124977
- DE-A1-102005 050 676
- KR-A- 20000 048 882
- US-A- 4 804 028
- US-A- 5 376 438
- US-A1- 2006 016 534
- US-A1- 2011 184 118

## Description

### CROSS-REFERENCE TO RELATED APPLICATIONS

### BACKGROUND

In the manufacture of a vehicle tire, it may be desirable to apply a painted design or wording to at least a portion of the tire's sidewall. For example, one may desire to apply any of a variety of designs or wording to a tire, including for example: a color pattern, an indicia, branding, tire information, a logo, an image, applique, and the like. The designs maybe applied to the tire with paints, inks, or the like.

However, it may be difficult to maintain proper adhesion between a traditional paint or ink and a traditional tire sidewall compound. For example, traditional tire sidewall compounds may include waxes that inhibit proper adhesion between the paint or ink and the compound. As a result, designs or wording applied to the tire in such a manner may disbond prematurely, if they ever bond at all.

Additionally, tire sidewall compounds including a wax or an antiozonant may seep through the compound to the surface and discolor applied paints or inks oriented thereon. As a result, wording or designs applied to a tire sidewall wherein the sidewall compound includes a wax and/or an antiozonant may be disrupted, stained, or otherwise ruined by the wax and/or antiozonant.

What is needed is a sidewall cushion layer and cover layer combination that permits application of wording or designs in paint or ink with proper bonding and without degradation by a wax and/or antiozonant.

### SUMMARY

In one embodiment, a tire is provided, the tire comprising: a sidewall portion including a cushion layer and a cover layer, wherein the cover layer is oriented axially outwardly of the cushion layer, wherein the cover layer is bonded to the cushion layer, wherein the cover layer is formed from a material that contains wax in a concentration of less than 0.03 pph, and wherein the cushion layer does not contain a wax.

In another embodiment, a tire is provided, the tire comprising: a sidewall portion including a cushion layer and a cover layer, wherein the cover layer is oriented axially outwardly of the cushion layer, wherein the cover layer is bonded to the cushion layer, wherein the cover layer is a thermoset material, and wherein the cover layer is formed from a material that contains a staining antiozonant in a concentration of less than 0.015 pph.

In another embodiment, a tire is provided, the tire comprising: a sidewall portion including a cushion layer and a cover layer, wherein the cover layer is oriented axially outwardly of the cushion layer, wherein the cover layer is bonded to the cushion layer, wherein the cover layer is formed from a cover layer compound having a variety of polymers, wherein at least a portion of the polymers have an ozone resistant backbone, and wherein the cover layer compound contains a staining antiozonant in a concentration of less than 0.03 pph.

### BRIEF DESCRIPTION OF THE DRAWINGS

The accompanying figures, which are incorporated in and constitute a part of the specification, illustrate various example systems and apparatuses, and are used merely to illustrate various example embodiments. In the figures, like elements bear like reference numerals.
**FIG.** 1 illustrates a cross-section of a sidewall portion of a tire including a cover layer.
**FIG. 2A** illustrates a cross-section of a portion of a tire **200** including a cover layer **206.**
**FIG. 2B** illustrates a cross-section of a portion of tire **200** including cover layer **206.**
**FIG. 3** illustrates a cross-section of a sidewall portion of a tire including a cover layer.
**FIG. 4A** illustrates a cross-section of a portion of a tire **400** including a cover layer **406.**
**FIG. 4B** illustrates a cross-section of a portion of tire **400** including cover layer **406.**
**FIG. 4C** illustrates a cross-section of a portion of tire **400** including cover layer **406.**

### DETAILED DESCRIPTION

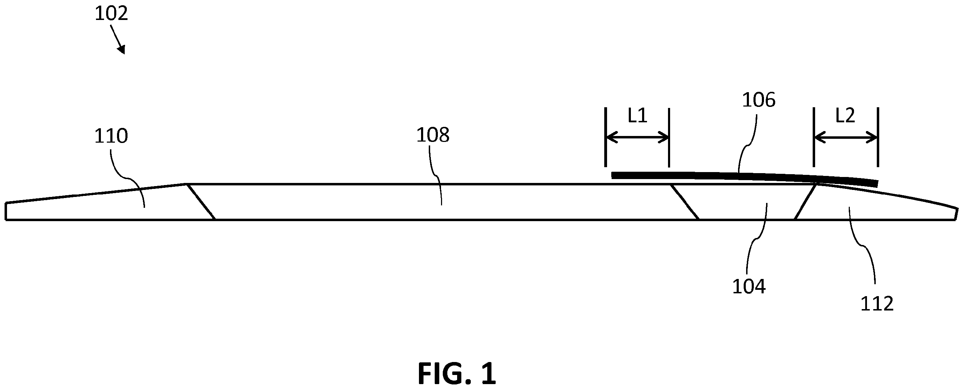

**FIG. 1** illustrates a cross-section of a sidewall portion **102** of a tire. Sidewall portion **102** may include a cushion layer **104** and a cover layer **106.** Sidewall portion **102** may include a sidewall compound material **108.** Sidewall portion **102** may include a belt edge insert **110.** Sidewall portion **102** may include an abrasion material **112.**

Sidewall portion **102** may be assembled from its various components and applied to a tire carcass at a tire building machine. Alternatively, any of the various components of sidewall portion **102** may be applied to a tire carcass at a tire building machine. At least some of sidewall portion **102** may be formed from its various components via co-extrusion. At least some of sidewall portion **102** may be formed from its various components via co-calendering. At least some of sidewall portion **102** may be formed from its various components via stitching together of the various components. Any of the various components outlined above may be formed via extrusion. Any of the various components outlined above may be formed via calendering.

Cushion layer **104** may be formed from any of a variety of materials, including for example a polymeric material, a rubber, a composite, and the like. Cushion layer **104** may be formed from a material that contains no wax. Cushion layer **104** may be formed from a material that contains wax in a concentration of less than about 5 pph. Cushion layer **104** may be formed from a material that contains no antiozonant. Cushion layer **104** may be formed from a material that contains antiozonant in a concentration of less than about 5 pph. Cushion layer **104** may be formed from a non-staining polymer material. Cushion layer **104** may be formed from a material that contains no staining antiozonant. Cushion layer **104** may be formed from a material that contains staining antiozonant in a concentration of less than about 0.10 pph. Cushion layer **104** may be formed from a material that contains staining antiozonant in a concentration of less than about 0.05 pph. Cushion layer **104** may be formed from a material that contains staining antiozonant in a concentration of less than about 0.03 pph. Cushion layer **104** may be formed from a material that contains staining antiozonant in a concentration of less than about 0.015 pph. Cushion layer **104** may be formed from a material that contains only trace amounts of staining antiozonant. Cushion layer **104** may be formed from a material that has non-staining antiozonant.

Cushion layer **104** may be oriented on both sides of a tire. Cushion layer **104** may be oriented on only an outboard side of a tire. Cushion layer **104** may be oriented on only an inboard side of a tire. Cushion layer **104** may be oriented in any part of sidewall portion **102.** Cushion layer **104** may be oriented in a lower sidewall region of sidewall portion **102.** Cushion layer **104** may be oriented in an upper sidewall region of sidewall portion **102.** Cushion layer **104** may be oriented in a central region of sidewall portion **102.** A plurality of cushion layers **104** may be oriented in sidewall portion **102.**

Cover layer **106** may be formed from any of a variety of materials, including for example a polymeric material, a rubber, a composite, and the like. Cover layer **106** may be formed from a material that contains no wax. Cover layer **106** may be formed from a material that contains wax in a concentration of less than 0.1 pph. Cover layer **106** may be formed from a material that contains wax in a concentration of less than 0.05 pph. Cover layer **106** may be formed from a material that contains wax in a concentration of less than 0.03 pph. Cover layer **106** may be formed from a material that contains wax in a concentration of less than 0.015 pph. Cover layer **106** may be formed from a material that contains only trace amounts of wax. Cover layer **106** may be formed from a material that contains no antiozonant. Cover layer **106** may be formed from a material that contains antiozonant in a concentration of less than 5 pph. Cover layer **106** may be formed from a non-staining polymer material. Cover layer **106** may be formed from a material that contains no staining antiozonant. Cover layer **106** may be formed from a material that contains staining antiozonant in a concentration of less than 0.1 pph. Cover layer **106** may be formed from a material that contains staining antiozonant in a concentration of less than 0.05 pph. Cover layer **106** may be formed from a material that contains staining antiozonant in a concentration of less than 0.03 pph. Cover layer **106** may be formed from a material that contains staining antiozonant in a concentration of less than 0.015 pph. Cover layer **106** may be formed from a material that contains only trace amounts of staining antiozonant. Cover layer **106** may be formed from a material that has non-staining antiozonant. Cover layer **106** may be formed using a material having a backbone polymer that is ozone resistant. Cover layer **106** may be formed from a material that is ozone resistant, but that does not contain wax or antiozonant. Cover lay 106 may be formed from a thermoset material.

Cover layer **106** may be formed from a cover layer compound having a variety of polymers. At least a portion of the polymers of the cover layer compound may have an ozone resistant backbone. About 50% of the polymers of the cover layer compound may have an ozone resistant backbone. Between about 30% and about 70% of the polymers of the cover layer compound may have an ozone resistant backbone. Between about 40% and about 60% of the polymers of the cover layer compound may have an ozone resistant backbone. The cover layer compound may contain staining antiozonant in only trace amounts. The cover layer compound may contain staining antiozonant in a concentration of less than 0.03 pph. The cover layer compound may contain staining antiozonant in a concentration of less than 0.015 pph.

Cover layer **106** may be oriented on both sides of a tire. Cover layer **106** may be oriented on only an outboard side of a tire. Cover layer **106** may be oriented on only an inboard side of a tire. Cover layer **106** may be oriented in any part of sidewall portion **102.** Cover layer **106** may be oriented in a lower sidewall region of sidewall portion **102.** Cover layer **106** may be oriented in an upper sidewall region of sidewall portion **102.** Cover layer **106** may be oriented in a central region of sidewall portion **102.** A plurality of cover layers **106** may be oriented in sidewall portion **102.**

Cover layer **106** may be applied over cushion layer **104.** Cover layer **106** may be laminated upon cushion layer **104.** Cover layer **106** may be calendered over cushion layer **104.** Cover layer **106** may be applied to cushion layer **104** when both cover layer **106** and cushion layer **104** are uncured, after which the two may be cured. Cover layer **106** may be applied to cushion layer **104** when cover layer **106** is uncured and cushion layer **104** is cured, after which the two may undergo curing together. Cover layer **106** may be applied to cushion layer **104** and bonded to cushion layer with an adhesive.

Cover layer **106** may extend radially past cushion layer **104** on at least one side. Cover layer **106** may extend past cushion layer **104** on a first side by a distance **L1.** Distance **L1** may be any distance. For instance, distance **L1** may be about 6.4 mm. Distance **L1** may be between about 0.0 mm and about 12.7 mm. Distance **L1** may be between about 3.2 mm and about 9.5 mm. The first side may be oriented nearer the tire's tread (not shown) in the finished product. Distance **L1** may include a range utilizing the upper and lower limits of any ranges, or exact values, disclosed herein.

Cover layer **106** may extend radially past cushion layer **104** on a second side by a distance **L2.** Distance **L2** may be any distance. For instance, distance **L2** may be about 6.4 mm. Distance **L2** may be between about 0.0 mm and about 12.7 mm. Distance **L2** may be between about 3.2 mm and about 9.5 mm. The second side may be oriented nearer the tire's bead (not shown) in the finished product. Distance **L2** may include a range utilizing the upper and lower limits of any ranges, or exact values, disclosed herein.

Cover layer **106** may extend radially past cushion layer **104** a distance **L1** and **L2** so as to prevent exposure of cushion layer **104** to the atmosphere. That is, cushion layer **104** may be degraded if exposed to the atmosphere, and cover layer 106 may be oriented so as to "seal" cushion layer **104** off from the atmosphere. Cover layer **106** may be substantially impervious to atmospheric gases, including for example, air, oxygen, nitrogen, argon, carbon dioxide, and the like. Cover layer **106** may be impervious to atmospheric gases, including for example, air, oxygen, nitrogen, argon, carbon dioxide, and the like.

Cover layer **106** may extend along sidewall portion **102** in any area and does not fall within a splice between any two other materials (whether the materials are the same materials or different materials). That is, in one embodiment, no portion of cover layer **106** may extend between any two other materials at the site of a splice of the two other materials. Orientation of cover layer **106** within a splice between two materials may cause delamination of the two materials as the materials may not properly bond with cover layer **106** in the splice.

Cover layer **106** may have a gauge of about 0.5 mm. Cover layer **106** may have a gauge of about 1.0 mm. Cover layer **106** may have a gauge of less than about 0.5 mm. Cover layer **106** may have a gauge of less than about 1.0 mm. Cover layer **106** may have a gauge greater than about 1.0 mm. Cover layer **106** may have a gauge of greater than about 0.5 mm.

A printing ink and/or paint may be applied to at least a portion of cover layer **106.** The printing ink may be a UV-cured ink, such that the ink cures upon exposure to a UV light. The printing ink may be any of a variety of common inks. The printing ink and/or paint may be specifically formulated for bonding to a polymeric material, rubber material, or the like. The printing ink and/or paint may be applied to cover layer **106** following curing of cover layer **106.** The printing ink and/or paint may be applied to cover layer **106** prior to curing of cover layer **106.** The printing ink and/or paint may be applied to cover layer **106** during curing of cover layer **106.**

In one embodiment, no design and/or wording, including printing ink and/or paint, is applied to cover layer **106.** Cover layer **106** may be dyed through its entirety, and the dyed cover layer **106** may act as a design and/or wording. In one embodiment, cover layer **106** may include labels. Cover layer **106** may include stickers. Cover layer **106** may include any ornamentation. Cover layer **106** may include any coating.

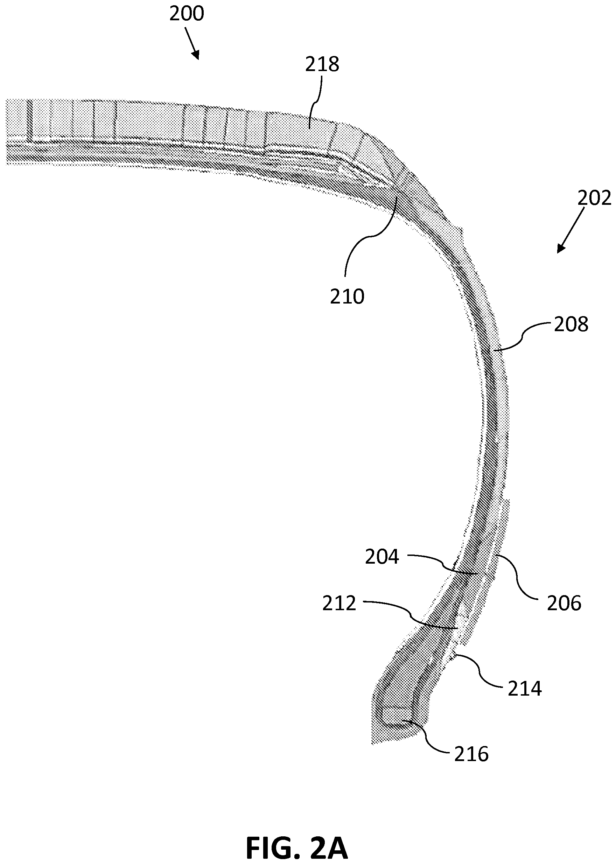

**FIG. 2A** illustrates a cross-section of a portion of a tire **200.** Tire **200** may include a sidewall portion **202.** Sidewall portion **202** may include a cushion layer **204** and a cover layer **206.** Sidewall portion **202** may include a sidewall compound material **208.** Sidewall portion **202** may include a belt edge insert **210.** Sidewall portion **202** may include an abrasion material **212.** Tire **200** may include a rim centering ring **214** oriented in the lower sidewall region. Tire **200** may include a bead **216.** Tire **200** may include a tread portion **218.**

Each of the various elements illustrated in **FIG. 2A** may be substantially similar to those described above in **FIG. 1****.**

Rim centering ring **214** may be oriented at a specified distance from bead **216** in the lower sidewall region. Rim centering ring **214** may be utilized to assist in ensuring concentricity between the tire and a rim (not shown). Cover layer **206** may terminate radially outwardly from rim centering ring **214.** Cover layer **206** may terminate at or near rim centering ring **214.**

Belt edge insert **210** may be oriented radially inwardly of tread portion **218.**

As illustrated, cover layer **206** and cushion layer **204** may be oriented in the lower sidewall region of tire **200.** The lower sidewall portion of tire **200** may be defined, in one embodiment, as the radially inner half of sidewall portion **202.** Cover layer **206** and cushion layer **204** may be oriented in the radially inner half of sidewall portion **202.** Cover layer **206** and cushion layer **204** may be oriented exclusively in the lower sidewall portion of tire **200.** A design or wording applied to cover layer **206** may thus be oriented in the lower sidewall region of tire **200.** As illustrated, cover layer **206** may be oriented axially outwardly from the centerline of the tire relative to cushion layer **204.** Cover layer **206** may be oriented in a layer, axially outwardly relative to other components of the tire, including for example sidewall compound material **208,** abrasion material **212,** and the like.

**FIG. 2A** illustrates a "tread-over-sidewall" embodiment, wherein tread **218** has a shoulder element that overlaps (that is, is oriented radially and axially outward relative to) sidewall portion **202** and/or sidewall compound material **208.** In some embodiments, referred to herein as "sidewall-over-tread" embodiments, sidewall portion **202** and/or sidewall compound material **208** overlap tread **218** including any shoulder element associated with tread **218.**

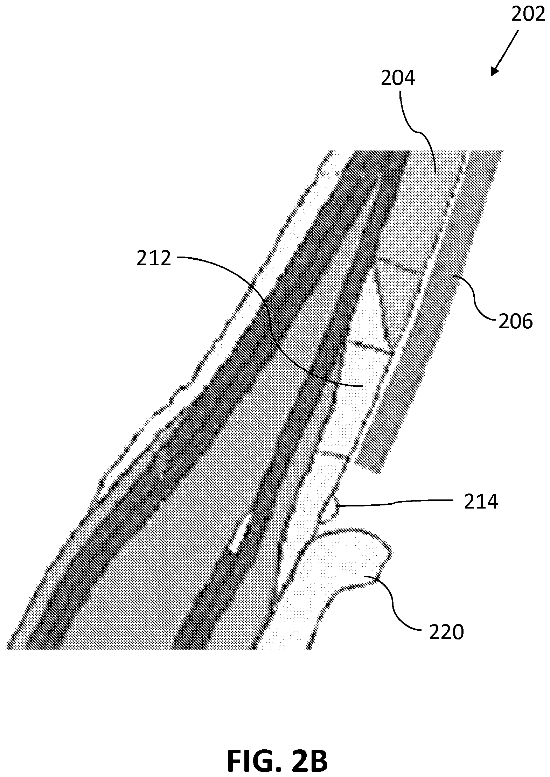

**FIG. 2B** illustrates a cross-section of a portion of tire **200** including cover layer **206.** Tire **200** may be mounted on a rim having a flange **220.** As illustrated, cover layer **206** may be oriented radially outwardly of rim centering ring **214** and flange **220.** Abrasion material may be oriented axially inwardly of at least one of rim centering ring **214** and flange **220.**

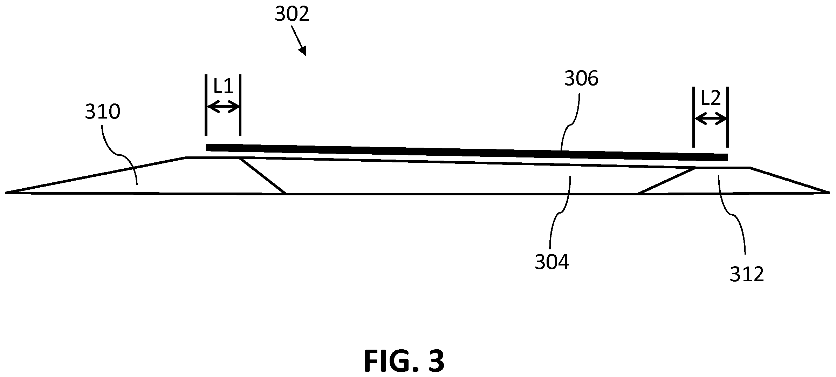

**FIG. 3** illustrates a cross-section of a sidewall portion **302** of a tire. Sidewall portion **302** may include a cushion layer **304** and a cover layer **306.** Sidewall portion **302** may include a belt edge insert **310.** Sidewall portion **302** may include an abrasion material **312.** The various components illustrated in **FIG. 3** may have the same or similar arrangement as those discussed above with respect to **FIG. 1****.**

Cushion **304** may be oriented along the majority of sidewall portion **302.** Cushion **304** may be oriented along at least 60% of the length of sidewall portion **302.**

Cover layer **306** may extend along sidewall portion **302** in any area but does not fall within a splice between any two other materials (whether the materials are the same materials or different materials). That is, in one embodiment, no portion of cover layer **306** may extend between any two other materials at the site of a splice of the two other materials. Orientation of cover layer **306** within a splice between two materials may cause delamination of the two materials.

Cover layer **306** may be oriented about the majority of sidewall portion **302.** Cover layer **306** may be oriented about at least 60% of the length of sidewall portion **302.** Cover layer **306** may be oriented about at least 70% of the length of sidewall portion **302.** Cover layer **306** may be oriented about 100% of the length of sidewall portion **302.** Cover layer **306** may be oriented about greater than 100% of the length of sidewall portion **302.** Cover layer **306** may be oriented about 110% of the length of sidewall portion **302.** Cover layer **306** may be oriented about 120% of the length of sidewall portion **302.**

Where a tire is formed in a sidewall-over-tread embodiment, cover layer **306** may extend about 100% of the length of sidewall portion **302.** Where a tire is formed in a tread-over-sidewall embodiment, cover layer **306** may extend less than 100% of the length of sidewall portion **302,** or up until sidewall portion **302** underlaps another material (e.g., at a splice with another material, for example a tread portion).

Cover layer **306** may extend radially past cushion layer **304** on at least one side. Cover layer **306** may extend past cushion layer **304** on a first side by a distance **L1.** Distance **L1** may be any distance. For instance, distance **L1** may be about 9.5 mm. Distance **L1** may be between about 0.0 mm and about 15.9 mm. Distance **L1** may be between about 4.8 mm and about 12.7 mm. The first side may be oriented nearer the tire's tread (not shown) in the finished product. Distance **L1** may include a range utilizing the upper and lower limits of any ranges, or exact values, disclosed herein.

Cover layer **306** may extend radially past cushion layer **304** on a second side by a distance **L2.** Distance **L2** may be any distance. For instance, distance **L2** may be about 6.4 mm. Distance **L2** may be between about 0.0 mm and about 12.7 mm. Distance **L2** may be between about 3.2 mm and about 9.5 mm. The second side may be oriented nearer the tire's bead (not shown) in the finished product. Distance **L2** may include a range utilizing the upper and lower limits of any ranges, or exact values, disclosed herein.

Cover layer **306** may extend radially past cushion layer **304** a distance **L1** and **L2** so as to prevent exposure of cushion layer **304** to the atmosphere. That is, cushion layer **304** may be degraded if exposed to the atmosphere, and cover layer **306** may be oriented so as to "seal" cushion layer **304** off from the atmosphere. Cover layer **306** may be substantially impervious or completely impervious to atmospheric gases as described above with respect to **FIG. 1****.**

Cover layer **306** may extend along sidewall portion **302** in any area but does not fall within a splice between any two other materials (whether the materials are the same materials or different materials). That is, in one embodiment, no portion of cover layer **306** may extend between any two other materials at the site of a splice of the two other materials. Orientation of cover layer **306** within a splice between two materials may cause delamination of the two materials.

Cover layer **306** may have a gauge of about 0.5 mm. Cover layer **306** may have a gauge of about 1.0 mm. Cover layer **306** may have a gauge of less than about 0.5 mm. Cover layer **306** may have a gauge of less than about 1.0 mm. Cover layer **306** may have a gauge greater than about 1.0 mm. Cover layer **306** may have a gauge greater than about 0.5 mm.

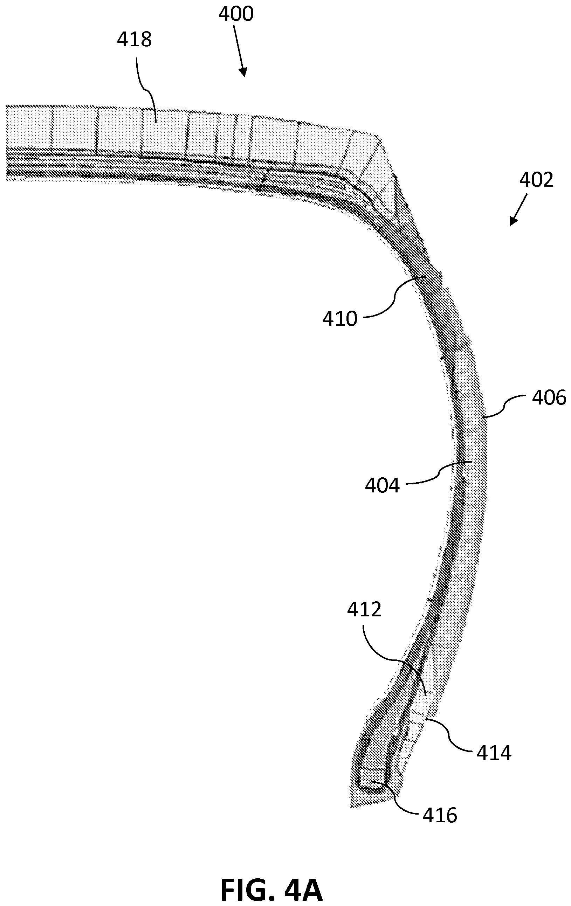

**FIG. 4A** illustrates a cross-section of a portion of a tire **400.** Tire **400** may include a sidewall portion **402.** Sidewall portion **402** may include a cushion layer **404** and a cover layer **406.** Sidewall portion **402** may include a belt edge insert **410.** Sidewall portion **402** may include an abrasion material **412.** Tire **400** may include a rim centering ring **414** oriented in the lower sidewall region. Tire **400** may include a bead **416.** Tire **400** may include a tread portion **418.**

Each of the various elements illustrated in **FIG. 4A** may be substantially similar to those described above in **FIG. 1****.**

Cover layer **406** may extend radially inwardly to about the same position as rim centering ring **414.** Cover layer **406** may terminate radially outwardly of rim centering ring **414.** Cover layer **406** may terminate radially inwardly of rim centering ring **414.**

**FIG. 4A** illustrates a "tread-over-sidewall" embodiment, wherein tread **418** has a shoulder element that overlaps (that is, is oriented radially and axially outward relative to) sidewall portion **402** and belt edge insert **410.** In some embodiments, referred to herein as "sidewall-over-tread" embodiments, sidewall portion **402** overlaps tread **418** including any shoulder element associated with tread **418.**

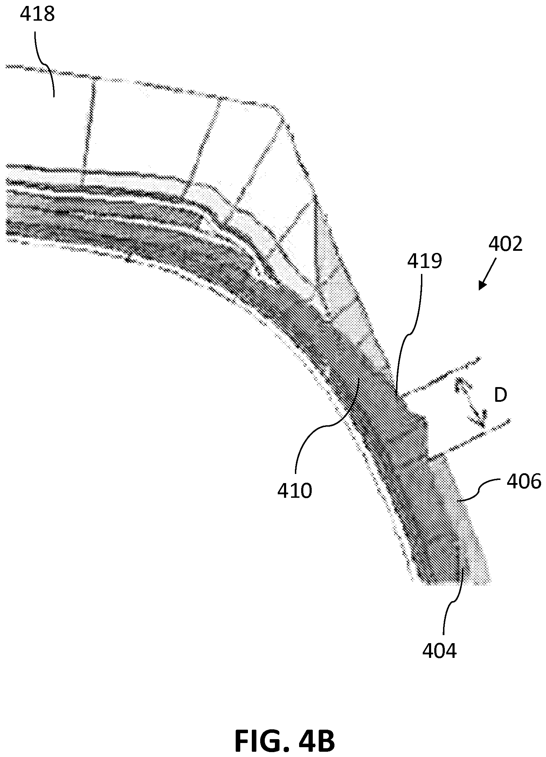

**FIG. 4B** illustrates a cross-section of a portion of tire **400**. Tread portion **418** may include an axially outermost portion referred to as a tread edge **419.** Cover layer **406** may terminate radially inwardly of tread edge **419.** Cover layer **406** may terminate radially inwardly by a distance **D.** Distance **D** may be any distance. Distance **D** may be greater than or equal to 0.0 mm. Distance **D** may be about 9.5 mm. Distance **D** may be between about 0.0 mm and about 38.0 mm. Distance **D** may be between about 1.0 mm and about 15.0 mm. Alternatively, distance **D** may have a negative value. That is, cover layer **406** may overlap tread edge **419.** Cover layer **406** may extend axially outwardly relative to tread portion **418** in either a tread-over-sidewall or a sidewall-over-tread tire structure. Distance **D** may include a range utilizing the upper and lower limits of any ranges, or exact values, disclosed herein.

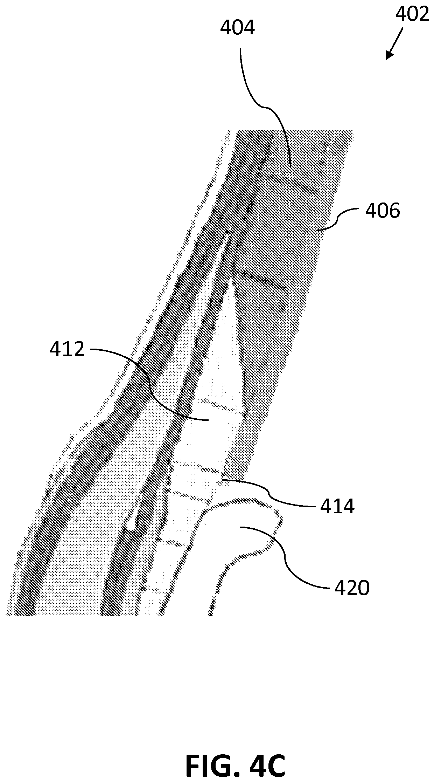

**FIG. 4C** illustrates a cross-section of a portion of tire **400** including cover layer **406.** Tire **400** may be mounted on a rim having a flange **420.** As illustrated, cover layer **406** may terminate at or near rim centering ring **414,** and radially outwardly of flange **420.** Abrasion material may be oriented axially inwardly of at least one of rim centering ring **414** and flange **420.**

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See Bryan A. Garner, A Dictionary of Modern Legal Usage 624 (2d. Ed. 1995). Also, to the extent that the terms "in" or "into" are used in the specification or the claims, it is intended to additionally mean "on" or "onto." To the extent that the term "substantially" is used in the specification or the claims, it is intended to take into consideration the degree of precision available or prudent in manufacturing. To the extent that the term "selectively" is used in the specification or the claims, it is intended to refer to a condition of a component wherein a user of the apparatus may activate or deactivate the feature or function of the component as is necessary or desired in use of the apparatus. To the extent that the term "operatively connected" is used in the specification or the claims, it is intended to mean that the identified components are connected in a way to perform a designated function. As used in the specification and the claims, the singular forms "a," "an," and "the" include the plural. Finally, where the term "about" is used in conjunction with a number, it is intended to include ± 10% of the number. In other words, "about 10" may mean from 9 to 11.

As stated above, while the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art, having the benefit of the present application. Therefore, the application, in its broader aspects, is not limited to the specific details, illustrative examples shown, or any apparatus referred to. Departures may be made from such details, examples, and apparatuses without departing from the spirit or scope of the general inventive concept.

## Claims

1. A tire (200, 400), comprising:
a sidewall portion (102, 202, 302, 402) including a cushion layer (104, 204, 304, 404) and a cover layer (106, 206, 306, 406),
wherein the cover layer (106, 206, 306, 406) is oriented axially outwardly of the cushion layer (104, 204, 304, 404),
wherein the cover layer (106, 206, 306, 406) is bonded to the cushion layer (104, 204, 304, 404),
wherein the cover layer (106, 206, 306, 406) is formed from a material that contains wax in a concentration of less than 0.03 pph, and
wherein the cushion layer (104, 204, 304, 404) does not contain a wax.

2. The tire (200, 400) of claim 1, wherein the cover layer (106, 206, 306, 406) extends radially past the cushion layer (104, 204, 304, 404) on a radially outward side of cover layer (106, 206, 306, 406) by a distance L1, and wherein the distance L1 is one of 6.4 mm and 9.5 mm.

3. The tire (200, 400) of claim 1, wherein the cover layer (106, 206, 306, 406) extends radially past the cushion layer (104, 204, 304, 404) on a radially inward side of the cover layer (106, 206, 306, 406) by a distance L2, and wherein the distance L2 is 6.4 mm.

4. The tire (200, 400) of claim 1, wherein the cover layer (106, 206, 306, 406) includes a thermoset material.

5. The tire (200, 400) of claim 1, wherein the cover layer (106, 206, 306, 406) is formed from a non-staining polymer material.

6. The tire (200, 400) of claim 1, wherein the cushion layer (104, 204, 304, 404) is formed from a material that contains a staining antiozonant in a concentration of less than 0.03 pph.

7. The tire (200, 400) of claim 1, wherein the cushion layer (104, 204, 304, 404) contains a non-staining polymer material.

8. A tire (200, 400), comprising:
a sidewall portion (102, 202, 302, 402) including a cushion layer (104, 204, 304, 404) and a cover layer (106, 206, 306, 406),
wherein the cover layer (106, 206, 306, 406) is oriented axially outwardly of the cushion layer (104, 204, 304, 404),
wherein the cover layer (106, 206, 306, 406) is bonded to the cushion layer (104, 204, 304, 404),
wherein the cover layer (106, 206, 306, 406) is a thermoset material, and
wherein the cover layer (106, 206, 306, 406) is formed from a material that contains a staining antiozonant in a concentration of less than 0.015 pph.

9. The tire (200, 400) of claim 8, wherein the cover layer (106, 206, 306, 406) extends radially past the cushion layer (104, 204, 304, 404) on a radially outward side of cover layer (106, 206, 306, 406) by a distance L1, and wherein the distance L1 is one of 6.4 mm and 9.5 mm.

10. The tire (200, 400) of claim 8, wherein the cover layer (106, 206, 306, 406) extends radially past the cushion layer (104, 204, 304, 404) on a radially inward side of the cover layer (106, 206, 306, 406) by a distance L2, and wherein the distance L2 is 6.4 mm.

11. The tire (200, 400) of claim 8, wherein the cover layer (106, 206, 306, 406) is formed from a material that contains wax in a concentration of less than 0.03 pph.

12. The tire (200, 400) of claim 8, wherein the cushion layer (104, 204, 304, 404) contains a non-staining polymer material.

13. A tire (200, 400), comprising:
a sidewall portion (102, 202, 302, 402) including a cushion layer (104, 204, 304, 404) and a cover layer (106, 206, 306, 406),
wherein the cover layer (106, 206, 306, 406) is oriented axially outwardly of the cushion layer (104, 204, 304, 404),
wherein the cover layer (106, 206, 306, 406) is bonded to the cushion layer (104, 204, 304, 404),
wherein the cover layer (106, 206, 306, 406) is formed from a cover layer (106, 206, 306, 406) compound having a variety of polymers,
wherein at least a portion of the polymers have an ozone resistant backbone, and
wherein the cover layer (106, 206, 306, 406) compound contains a staining antiozonant in a concentration of less than 0.03 pph.

14. The tire (200, 400) of claim 13, wherein between 40% and 60% of the polymers have an ozone resistant backbone, and wherein the cover layer (106, 206, 306, 406) compound contains a staining antiozonant in a concentration of less than 0.015 pph.

15. The tire (200, 400) of claim 13, wherein the cover layer (106, 206, 306, 406) includes a thermoset material.

## Patentansprüche

1. Reifen (200, 400), umfassend:
einen Seitenwandabschnitt (102, 202, 302, 402) mit einer Dämpferschicht (104, 204, 304, 404) und einer Deckschicht (106, 206, 306, 406),
wobei die Deckschicht (106, 206, 306, 406) gegenüber der Dämpferschicht (104, 204, 304, 404) axial nach außen gerichtet ist,
wobei die Deckschicht (106, 206, 306, 406) mit der Dämpferschicht (104, 204, 304, 404) verklebt ist,
wobei die Deckschicht (106, 206, 306, 406) aus einem Material gebildet ist, das Wachs in einer Konzentration von weniger als 0,03 pph enthält, und
wobei die Dämpferschicht (104, 204, 304, 404) kein Wachs enthält.

2. Reifen (200, 400) nach Anspruch 1, wobei sich die Deckschicht (106, 206, 306, 406) radial nach der Dämpferschicht (104, 204, 304, 404) auf einer radial außenliegenden Seite der Deckschicht (106, 206, 306, 406) in einem Abstand L1 erstreckt, und wobei der Abstand L1 eines von 6,4 mm und 9,5 mm beträgt.

3. Reifen (200, 400) nach Anspruch 1, wobei sich die Deckschicht (106, 206, 306, 406) radial nach der Dämpferschicht (104, 204, 304, 404) auf einer radial innenliegenden Seite der Deckschicht (106, 206, 306, 406) in einem Abstand L2 erstreckt, und wobei der Abstand L2 6,4 mm beträgt.

4. Reifen (200, 400) nach Anspruch 1, wobei die Deckschicht (106, 206, 306, 406) ein wärmehärtendes Material einschließt.

5. Reifen (200, 400) nach Anspruch 1, wobei die Deckschicht (106, 206, 306, 406) aus einem nicht färbenden Polymermaterial gebildet ist.

6. Reifen (200, 400) nach Anspruch 1, wobei die Deckschicht (104, 204, 304, 404) aus einem Material gebildet ist, das ein färbendes Antiozonierungsmittel in einer Konzentration von weniger als 0,03 pph enthält.

7. Reifen (200, 400) nach Anspruch 1, wobei die Dämpferschicht (104, 204, 304, 404) ein nicht färbendes Polymermaterial enthält.

8. Reifen (200, 400), umfassend:
einen Seitenwandabschnitt (102, 202, 302, 402) mit einer Dämpferschicht (104, 204, 304, 404) und einer Deckschicht (106, 206, 306, 406),
wobei die Deckschicht (106, 206, 306, 406) gegenüber der Dämpferschicht (104, 204, 304, 404) axial nach außen gerichtet ist,
wobei die Deckschicht (106, 206, 306, 406) mit der Dämpferschicht (104, 204, 304, 404) verklebt ist,
wobei die Dämpferschicht (106, 206, 306, 406) ein wärmehärtendes Material ist, und
wobei die Deckschicht (106, 206, 306, 406) aus einem Material gebildet ist, das färbendes Antiozonierungsmittel in einer Konzentration von weniger als 0,015 pph enthält.

9. Reifen (200, 400) nach Anspruch 8, wobei sich die Deckschicht (106, 206, 306, 406) radial nach der Dämpferschicht (104, 204, 304, 404) auf einer radial außenliegenden Seite der Deckschicht (106, 206, 306, 406) in einem Abstand L1 erstreckt, und wobei der Abstand L1 eines von 6,4 mm und 9,5 mm beträgt.

10. Reifen (200, 400) nach Anspruch 8, wobei sich die Deckschicht (106, 206, 306, 406) radial nach der Dämpferschicht (104, 204, 304, 404) auf einer radial innenliegenden Seite der Deckschicht (106, 206, 306, 406) in einem Abstand L2 erstreckt, und wobei der Abstand L2 6,4 mm beträgt.

11. Reifen (200, 400) nach Anspruch 8, wobei die Deckschicht (106, 206, 306, 406) aus einem Material gebildet ist, das Wachs in einer Konzentration von weniger als 0,03 pph enthält.

12. Reifen (200, 400) nach Anspruch 8, wobei die Dämpferschicht (104, 204, 304, 404) ein nicht färbendes Polymermaterial enthält.

13. Reifen (200, 400), umfassend:
einen Seitenwandabschnitt (102, 202, 302, 402) mit einer Dämpferschicht (104, 204, 304, 404) und einer Deckschicht (106, 206, 306, 406),
wobei die Deckschicht (106, 206, 306, 406) gegenüber der Dämpferschicht (104, 204, 304, 404) axial nach außen gerichtet ist,
wobei die Deckschicht (106, 206, 306, 406) mit der Dämpferschicht (104, 204, 304, 404) verklebt ist,
wobei die Deckschicht (106, 206, 306, 406) aus einer Verbindung der Deckschicht (106, 206, 306, 406) gebildet ist, die eine Vielfalt von Polymeren aufweist,
wobei mindestens ein Abschnitt der Polymere ein ozonbeständiges Grundgerüst aufweist, und
wobei die Verbindung der Deckschicht (106, 206, 306, 406) ein färbendes Antiozonierungsmittel in einer Konzentration von weniger als 0,03 pph enthält.

14. Reifen (200, 400) nach Anspruch 13, wobei zwischen 40 % und 60 % der Polymere ein ozonbeständiges Grundgerüst aufweisen, und wobei die Verbindung der Deckschicht (106, 206, 306, 406) ein färbendes Antiozonierungsmittel in einer Konzentration von weniger als 0,015 pph enthält.

15. Reifen (200, 400) nach Anspruch 13, wobei die Deckschicht (106, 206, 306, 406) ein wärmehärtendes Material einschließt.

## Revendications

1. Pneumatique (200, 400), comprenant :
une partie flanc (102, 202, 302, 402) comprenant une couche de matelassage (104, 204, 304, 404) et une couche recouvrante (106, 206, 306, 406),
dans lequel la couche recouvrante (106, 206, 306, 406) est orientée axialement vers l'extérieur de la couche de matelassage (104, 204, 304, 404),
dans lequel la couche recouvrante (106, 206, 306, 406) est liée à la couche de matelassage (104, 204, 304, 404),
dans lequel la couche recouvrante (106, 206, 306, 406) est formée à partir d'un matériau qui contient de la cire à une concentration inférieure à 0,03 partie pour cent, et
dans lequel la couche de matelassage (104, 204, 304, 404) ne contient pas de cire.

2. Pneumatique (200, 400) selon la revendication 1, dans lequel la couche recouvrante (106, 206, 306, 406) s'étend radialement au-delà de la couche de matelassage (104, 204, 304, 404) sur un côté situé radialement vers l'extérieur de la couche recouvrante (106, 206, 306, 406) sur une distance L1, et dans lequel la distance L1 est égale à 6,4 mm ou 9,5 mm.

3. Pneumatique (200, 400) selon la revendication 1, dans lequel la couche recouvrante (106, 206, 306, 406) s'étend radialement au-delà de la couche de matelassage (104, 204, 304, 404) sur un côté situé radialement vers l'intérieur de la couche recouvrante (106, 206, 306, 406) sur une distance L2, et dans lequel la distance L2 est égale à 6,4 mm.

4. Pneumatique (200, 400) selon la revendication 1, dans lequel la couche recouvrante (106, 206, 306, 406) inclut un matériau thermodurci.

5. Pneumatique (200, 400) selon la revendication 1, dans lequel la couche recouvrante (106, 206, 306, 406) est formée à partir d'un matériau polymère non salissant.

6. Pneumatique (200, 400) selon la revendication 1, dans lequel la couche de matelassage (104, 204, 304, 404) est formée à partir d'un matériau qui contient un agent anti-ozone tachant à une concentration inférieure à 0,03 partie pour cent.

7. Pneumatique (200, 400) selon la revendication 1, dans lequel la couche de matelassage (104, 204, 304, 404) contient un matériau polymère non salissant.

8. Pneumatique (200, 400), comprenant :
une partie flanc (102, 202, 302, 402) comprenant une couche de matelassage (104, 204, 304, 404) et une couche recouvrante (106, 206, 306, 406),
dans lequel la couche recouvrante (106, 206, 306, 406) est orientée axialement vers l'extérieur de la couche de matelassage (104, 204, 304, 404),
dans lequel la couche recouvrante (106, 206, 306, 406) est liée à la couche de matelassage (104, 204, 304, 404),
dans lequel la couche recouvrante (106, 206, 306, 406) est un matériau thermodurci, et
dans lequel la couche recouvrante (106, 206, 306, 406) est formée à partir d'un matériau qui contient un agent anti-ozone tachant à une concentration inférieure à 0,015 partie pour cent.

9. Pneumatique (200, 400) selon la revendication 8, dans lequel la couche recouvrante (106, 206, 306, 406) s'étend radialement au-delà de la couche de matelassage (104, 204, 304, 404) sur un côté situé radialement vers l'extérieur de la couche recouvrante (106, 206, 306, 406) sur une distance L1, et dans lequel la distance L1 est égale à 6,4 mm ou 9,5 mm.

10. Pneumatique (200, 400) selon la revendication 8, dans lequel la couche recouvrante (106, 206, 306, 406) s'étend radialement au-delà de la couche de matelassage (104, 204, 304, 404) sur un côté situé radialement vers l'intérieur de la couche recouvrante (106, 206, 306, 406) sur une distance L2, et dans lequel la distance L2 est égale à 6,4 mm.

11. Pneumatique (200, 400) selon la revendication 8, dans lequel la couche recouvrante (106, 206, 306, 406) est formée à partir d'un matériau qui contient de la cire à une concentration inférieure à 0,03 partie pour cent.

12. Pneumatique (200, 400) selon la revendication 8, dans lequel la couche de matelassage (104, 204, 304, 404) contient un matériau polymère non salissant.

13. Pneumatique (200, 400), comprenant :
une partie flanc (102, 202, 302, 402) comprenant une couche de matelassage (104, 204, 304, 404) et une couche recouvrante (106, 206, 306, 406),
dans lequel la couche recouvrante (106, 206, 306, 406) est orientée axialement vers l'extérieur de la couche de matelassage (104, 204, 304, 404),
dans lequel la couche recouvrante (106, 206, 306, 406) est liée à la couche de matelassage (104, 204, 304, 404),
dans lequel la couche recouvrante (106, 206, 306, 406) est formée à partir d'un composé de couche recouvrante (106, 206, 306, 406) comportant une variété de polymères,
dans lequel au moins certains des polymères ont un squelette résistant à l'ozone, et
dans lequel le composé de couche recouvrante (106, 206, 306, 406) contient un agent anti-ozone tachant à une concentration inférieure à 0,03 partie pour cent.

14. Pneumatique (200, 400) selon la revendication 13, dans lequel entre 40 % et 60 % des polymères ont un squelette résistant à l'ozone, et dans lequel le composé de couche recouvrante (106, 206, 306, 406) contient un agent anti-ozone tachant à une concentration inférieure à 0,015 partie pour cent.

15. Pneumatique (200, 400) selon la revendication 13, dans lequel la couche recouvrante (106, 206, 306, 406) inclut un matériau thermodurci.
